# EUROPÄISCHE PATENTSCHRIFT

(11) **EP 0 940 461 B1**
(45) Veröffentlichungstag und Bekanntmachung des Hinweises auf die Patenterteilung: **27.10.2004**
(21) Anmeldenummer: 99100794.9
(22) Anmeldetag: 18.01.1999
(51) Int. Cl.: C09J 163/00, C09J 175/00, C09J 123/02, D06M 23/16, C09J 167/00, C09J 177/00

(54) **Vernetzende Basisschicht für Fixiereinlagen nach dem Doppelpunktverfahren**
Raster-like coating of Hot melt adhesive
Enduit réticulaire d'adhésifs pour collage à chaud

(30) Priorität: 03.03.1998 DE 19808809
(43) Veröffentlichungstag der Anmeldung: 08.09.1999
(73) Patentinhaber: Degussa AG, 40474 Düsseldorf (DE)
(72) Erfinder: Gurke, Thorsten, 45721 Haltern (DE); Simon, Ulrich, 44625 Herne (DE); Losensky, Hans-Willi Dr., 45772 Marl (DE)

(56) Entgegenhaltungen:
- US-A- 3 931 077
- US-A- 4 183 978
- US-A- 5 091 469
- US-A- 5 677 038

## Beschreibung

Die Erfindung betrifft eine vernetzbare Schmelzkleberbeschichtung auf Basis einer Pulvermischung aus einem handelsüblichen, aminterminierten Copolyamid oder Copolyester und einem pulverisierten Extrudat, bestehend aus einem ataktischen Polyolefin und einem pulverförmigen Isocyanat oder einem Epoxid, zur Herstellung eines Basispunktes als Rückschlagsperre bei der Doppelpunktbeschichtung. Der Oberpunkt besteht aus einem amingeregelten Copolyamid, um eine gute Anbindung an den Unterpunkt zu gewährleisten. Insbesondere betrifft die Erfindung eine Schmelzklebermasse zum rasterförmigen Beschichten von fixierbaren Einlagestoffen für die Bekleidungsindustrie, speziell Oberbekleidung. Statt des Copolyamids können auch OH-Gruppen terminierte Copolyester eingesetzt werden.

Um die Probleme hinsichtlich der reduzierten Wasch - und Reinigungsbeständigkeit sowie hinsichtlich der schwächeren Haftung zu lösen, sind verbesserte Schmelzklebermassen, aber auch verbesserte Beschichtungstechnologien entwickelt worden. Duo- oder Doppelpunktbeschichtungen sind z. B. in den Patenten DE-B 22 14 236, DE-B 22 31 723, DE-B 25 36 911 und DE-B 32 30 579 beschrieben.

Die Beschichtungsträger wurden dadurch verbessert, daß feinere Garne mit feintitrigen Einzelfasern bis hin zum Microfaserbereich sowie Synthetikgarne, beispielsweise Hochbauschacryl- oder Polyestergarne, verwendet werden. Die ursprünglich verwendeten Gewebe sind weitgehend durch Webwirk- und Wirkvliese ersetzt worden, wobei die zuletzt genannten Stoffe eine Kombination aus Vliesen mit Wirkwaren darstellen. Diese neuen Kombinationen führen zu sehr weichen aber auch sehr offenen Konstruktionen, die noch höhere Anforderungen an die Beschichtungsmethoden und Schmelzklebermassen stellen, besonders hinsichtlich Rückschlag und Durchschlag der Schmelzklebermasse.

Kosten und Qualitätsgründe haben dazu geführt, daß die Beschichtungsmenge, die pro m² Einlagenstoff aufgebracht wird, deutlich reduziert wurde. Während früher Auftragsmengen von 18 - 25 g/m² üblich waren, liegen diese heute bei 7 - 15 g/m².

Trotz dieser kleinen Mengen muß eine ausreichende Haftung und Beständigkeit gewährleistet sein, d.h., daß der Schmelzkleber nicht in die Einlage wegschlagen darf, denn dann steht er zur eigentlichen Verklebung nicht mehr zur Verfügung.

Der Erfindung lag daher die Aufgabe zugrunde, eine wirkungsvolle Rückschlagsperre zu finden, die bei verminderter Beschichtungsmenge eine hohe Haftfestigkeit, eine gute Anbindung des Oberpunktes an die Basisschicht und eine gute Wasch- und Reinigungsbeständigkeit aufweist.

Es sind eine Reihe von Rückschlagsperren bekannt: vernetzende Acrylat- oder Polyurethandispersionen oder pulvergefüllte Pasten auf Basis hochschmelzender Copolyamide und Polyethylen oder hochviskoser thermoplastischer Polyurethanpulver.

Alle Systeme haben mehr oder weniger große Nachteile bei der Applikation, der Anbindung an den Oberpunkt oder Beständigkeit gegen Wäsche. Außerdem sind die Dispersionen auf rauhen, haarigen Einlagen nicht einsetzbar.

Bei der Beschichtung selbstvernetzender Acrylat- oder Polyurethandispersionen kommt es schon während der Beschichtung zu teilweiser Vernetzung, was zu Schablonenbelag und damit Verstopfung der Schablonenlöcher führt. Aufwendiges Reinigen der Anlage ist notwendig. Zu großen Schwierigkeiten kommt es, wenn produktionsbedingter Stillstand eintritt. Außerdem ist die Anbindung des Oberpunktes an die Basisschicht ein Problem. Die hochviskosen pulvergefüllten Systeme auf Basis Polyamid, Polyethylen und Polyurethan erfüllen nicht die geforderte Rückschlagsicherheit.

Bisher ist es nicht gelungen, ein stabiles vernetzbares System für den Basispunkt zu schaffen. Entweder konnten die vorzugsweise einsetzbaren Isocyanate nicht gegen Wasser stabilisiert werden (Matrix für Beschichtungspasten) oder die Aktivierungstemperaturen für die Vernetzung (größer 160 °C) waren zu hoch.

Es ist nun überraschenderweise gelungen, ein sehr reaktives System gemäß der Patentansprüche mit einer Aktivierungstemperatur im Bereich von ca. 100 bis 130 °C und Wasserbeständigkeit herzustellen. Die erfindungsgemäße vernetzbare Schmelzklebermasse für die Beschichtung und/oder Laminierung von Flächengebilden, zeichnet sich dadurch aus, daß die in der Schmelzklebermasse vorhandenen reaktionsfähigen Komponenten erst in der Schmelze unter Vernetzung reagieren. Die Vernetzungskomponente wird dabei durch Extrusion in ein Polyolefin in der Schmelze eingearbeitet.

In einer bevorzugten Ausführungsform wird ein handelsübliches Copolyamid mit Aminendgruppen mit einem trimerisierten Diisocyanat, das durch Extrusion mit einem ataktischen Polyolefin passiviert wurde, gemischt und als wäßrige Paste im Rotationssiebdruck verarbeitet. Anstelle des Copolyamids kann auch ein Copolyester eingesetzt werden. Bei der anschließenden Trocknung im Ofen bei ca. 120 °C wird die Vernetzung innerhalb von einigen Sekunden eingeleitet, damit eine vernetzte Rückschlagsperre für den Doppelpunkt erhalten wird. Damit können die üblichen Probleme isocyanathaltiger Systeme umgangen werden, die zum Beispiel darin bestehen, daß verkappte Isocyanate (Caprolactam oder Oxime als Verkappungsmittel oder durch Dimerisierung erhalten) zu hohe Aktivierungstemperaturen benötigen, außerdem sollten bei der Fixierung keine Fremdstoffe frei werden. Das andere Problem war, daß nicht blockierte Isocyanate schon in der Paste mit Wasser abreagieren.

Es mußte das Isocyanat gegen Wasser stabilisiert werden, auch gegen Diffusion von Luftfeuchtigkeit, um bei relativ niedrigen Temperaturen die Aktivierbarkeit zu gewährleisten. Dieses gelang überraschenderweise, indem das Isocyanat in ein Polyolefin-Polymer, vorzugsweise ataktisches Polypropylen, durch Extrusion eingebunden wurde, das kein Wasser durch Diffusion aufnimmt und einen Schmelzpunkt von ca. 120 °C hat, und so niedrigviskos ist, so daß es möglich ist, beim Verpressen eine Reaktion des amingeregelten Copolyamids mit dem Isocyanat zu erreichen. Es eignen sich feste Isocyanate mit mehr als 2 freien NCO-Gruppen und einem Schmelzbereich von 100 bis 130 °C. Das Polymer der Matrix darf mit dem Isocyanat nicht reagieren. Als Vernetzungskomponente eignen sich auch Epoxide mit einem Schmelzbereich von 90 bis 130 °C, vorzugsweise 100 bis 120 °C, einem Molekulargewichtsbereich von 2 000 bis 6 000, vorzugsweise 2 500 bis 3 000, und mehr als 2 Epoxidgruppen pro Molekül, als Beispiel sei Bisphenol A erwähnt.

Als Polymermatrix wird bevorzugt ataktisches Polypropylen eingesetzt. Es sollte eine Schmelzviskosität von 8 000 bis 50 000 mPas bei 190 °C und einen Erweichungsbereich von 80 bis 150 °C , bevorzugt eine Schmelzviskosität von 8 000 bis 30 000 mPas bei 190 °C und einen Erweichungsbereich von 100 bis 140 °C, aufweisen. Als handelsübliche Produkte eignen sich z.B. VESTOPLAST 408, 308, 508, 520, 703, 704, 708 und 750 von der Hüls AG. Das Polyolefin kann auch ein ataktisches α-Olefin-Copolymer oder ein Terpolymer auf der Basis von Ethen, Propen und 1-Buten mit den oben beschriebenen Eigenschaften sein. Um eine besonders gute Anbindung des Oberpunktes an den Basispunkt zu erreichen, empfiehlt es sich, ein amingeregeltes Copolyamid als Oberpunktmaterial einzusetzen. Geeignete Produkte für den Basis- und Oberpunkt sind niedrigviskose, niedrigschmelzende Typen. Der Schmelzpunkt sollte zwischen 90 und 150 °C, bevorzugt zwischen 115 und 130 °C, betragen mit einer Lösungsviskosität eta rel im Bereich von 1,2 bis 1,7, vorzugsweise 1,25 bis 1,4. Dadurch reagiert die Grenzschicht mit der Isocyanatpaste und schafft eine sehr beständige Verbindung der beiden Punkte. Die Beschichtungsmengen für den Basispunkt sollten 2 bis 5 g/m² betragen, bevorzugt 2,5 bis 4 g/m², für den Oberpunkt je nach Anwendung 4 bis 8 g/m², besonders 5 bis 7 g/m². Statt des Copolyamids können auch OH-Gruppen terminierte Copolyester auf Basis Terephthalsäure, Isophthalsäure und Butandiol oder Butandiol in Kombination mit kleinen Mengen anderer Diole wie z. B. Hexandiol oder Polyethylenglykol, mit Schmelzpunkten von 100 bis 150 °C , eingesetzt werden.

Der Basispunkt kann als Paste rasterförmig aufgetragen werden. Ebenso kann die reaktive Pulvermischung durch einen Streuprozeß appliziert werden.

### Beispiele:

33,3 Gew.-% VESTANAT T 1890 wurden in einem Extruder bei 125 °C mit 66,6 Gew.-% VESTOPLAST 408 homogen gemischt, granuliert, kaltvermahlen und über ein 50 µm Sieb klassiert.

25 Gew.-% des oben beschriebenen Pulvers wurden mit 75 Gew.-% VESTAMELT X 1027-P1 im Schnellmischer gemischt.

Dieses Pulvergemisch wurde mit gängigen Dispergatoren und Verdickern, z. B. INTRASOL 12/18/5 und MIROX TX, der Firma Stockhausen, wie in DE-B 20 07 971, DE-B 22 29 308, DE-B 24 07 505 und DE-B 25 07 504 beschrieben, zu einer druckbaren Paste verarbeitet und mit einer Rotationssiebdruckanlage mit einer CP 66 Schablone auf ein 35 g Polyestergewirk mit Hochbauschgarn gedruckt. Der Auftrag betrug 2 g/m². Auf den noch nassen Pastenpunkt wurde VESTAMELT X 1027-P816 aufgestreut, der Überschuß abgesaugt und im Trockenofen bei 130 °C getrocknet und angesintert. Der Oberpunkt hatte eine Auflage von g/m², so daß das Gesamtgewicht 7 g/m² betrug.

Pastenrezeptur des Basispunktes:

| | |
|---|---|
| 1 500 g | Wasser |
| 35 g | MIROX TX (Polyacrylsäurederivat) |
| 40 g | INTRASOL 12/18/5 (ethoxilierter Fettalkohol) |
| 600 g | reaktives Pulvergemisch aus VESTOPLAST 408 und VESTANAT T 1890 |

### Ergebnis:

Ein 5 cm breiter Streifen dieser Einlage wurde gegen einen silikonisierten Blusenstoff aus einer Baumwoll-Polyestermischung bei einer Fugentemperatur von 127 °C, 10 s und einem Lineardruck von 4 N fixiert, anschließend wurde der Verbund einer 60 °C-Wäsche unterzogen.

| | |
|---|---|
| Primärhaftung | 16 N/ 5 cm |
| 60 °C Wäsche | 12 N/ 5 cm |
| Rückvernietung | 0,1 N/ 10 cm |

### Vergleichsbeispiel:

Auf der gleichen Einlage wurde ein Pastensystem auf Basis Polyamid/Polyethylen appliziert und mit dem gleichen Oberpunktmaterial bestreut, getrocknet und gesintert. Es wurden die gleichen Mengen an Basispunkt und Oberpunkt aufgetragen.

| Pastenrezeptur: | |
|---|---|
| 1 500 g | Wasser |
| 35 g | MIROX TX |
| 40 g | INTRASOL 12/18/5 |
| 400 g | SCHÄTTIFIX 1820 (ND-Polyethylen) |
| 200 g | VESTAMELT 751-P1 |

Das SCHÄTTIFIX 1820 ist ein Niederdruck-Polyethylen mit einem Schmelzpunkt von 128 - 130 °C und einem MFR-Wert von 20 g/10 min.

### Ergebnis:

| | |
|---|---|
| Primärhaftung | 9 N/ 5 cm |
| 60 °C Wäsche | 5 N/ 5 cm |
| Rückvernietung | 0,9 N/ 10 cm |

Der Vorteil der neuen Technologie ist, daß schon bei den Trockenbedingungen der Unterpunkt vernetzt und noch während des Aufschmelzens der Oberpunkt aufgrund seiner Aminterminierung mit dem Unterpunkt vernetzt und dadurch eine optimale Anbindung erhält. Da nach der Beschichtung der Unterpunkt stark im Molekulargewicht aufgebaut ist, kann er nicht mehr in das Gewirk absinken. Bei der anschließenden Fixierung wird das niedrigviskose Polyamid des Oberpunktes gezwungen, gegen den zu fixierenden Oberstoff zu fließen, da er nicht nach unten wegfließen kann, dadurch werden schon mit kleinsten Schmelzklebermengen sehr hohe Haftungen erzielt. Die Trennschicht zwischen Oberpunkt und Basispunkt, die bisher die Schwäche des Systems war, besonders bei der Wäsche, kann nicht so stark hydrolytisch angegriffen werden wie bei bisher bekannten Systemen und zeigt deshalb wesentlich höhere Beständigkeiten.

### Eingesetze Produkte:

VESTAMELT X 1027-P1 ist ein ternäres Copolyamid der Hüls AG auf Basis LL, CL und DDS/MPD mit Aminendgruppen, Schmelzpunkt 120 °C, Aminendgruppen 100 - 400 mVal/kg, bevorzugt 250 - 350 mVal/kg.
VESTOPLAST 408-P1 ist ein ataktisches α-Olefin-Co-Terpolymer der Hüls AG mit einem Erweichungspunkt von 118 °C und einer Schmelzviskosität bei 190 °C von 8 000 mPas.
VESTANAT T 1890/100 ist ein Polyisocyanat mit einer Funktionalität von 3 - 4, der Schmelzpunkt liegt bei 100 - 115 °C. Es ist ein Produkt der Hüls AG.

## Patentansprüche

1. Verfahren zur Herstellung einer vernetzbaren Schmelzklebermasse für die Beschichtung und/oder Laminierung von Flächengebilden,
**dadurch gekennzeichnet,**
**dass** zunächst die Vernetzungskomponente durch Extrusion in einer ataktischen Polyolefinmatrix in der Schmelze eingebunden wird und die reaktionsfähigen Komponenten erst in der Schmelze unter Vernetzung reagieren.

2. Verfahren zur Herstellung einer vernetzbaren Schmelzklebermasse nach Anspruch 1,
**dadurch gekennzeichnet,**
**dass** das Polyolefin ein ataktisches Polypropylen mit einer Schmelzviskosität von 8 000 bis 50 000 mPas (bei 190 °C) mit einem Erweichungspunkt von 80 bis 150 °C ist.

3. Verfahren zur Herstellung einer vernetzbaren Schmelzklebermasse nach einem der vorherigen Ansprüche,
**dadurch gekennzeichnet,**
**dass** das Polyolefin ein ataktisches Terpolymer auf Basis von Ethen, Propen und 1-Buten mit einer Schmelzviskosität von 8 000 bis 50 000 mPas (bei 190 °C) und einem Erweichungspunkt von 80 bis 150 °C ist.

4. Verfahren zur Herstellung einer vernetzbaren Schmelzklebermasse nach einem der vorherigen Ansprüche,
**dadurch gekennzeichnet,**
**dass** das Polyolefin eine Schmelzviskosität von 8 000 bis 30 000 mPas (bei 190 °C) und einen Erweichungspunkt von 100 bis 140 °C hat.

5. Verfahren zur Herstellung einer vernetzbaren Schmelzklebermasse nach einem der vorherigen Ansprüche,
**dadurch gekennzeichnet,**
**dass** die Vernetzungskomponente aus der Gruppe der Isocyanate stammt und mehr als zwei reaktive Gruppen pro Molekül hat.

6. Verfahren zur Herstellung einer vernetzbaren Schmelzklebermasse nach Anspruch 5,
**dadurch gekennzeichnet,**
**dass** das Isocyanat einen Schmelzbereich von 100 bis 130 °C aufweist.

7. Verfahren zur Herstellung einer vernetzbaren Schmelzklebermasse nach einem der vorherigen Ansprüche,
**dadurch gekennzeichnet,**
**dass** als Vernetzungskomponente ein Epoxid mit einem Schmelzbereich von 90 bis 130 °C, einem Molekulargewichtsbereich von 2 000 bis 6 000 und mehr als zwei Epoxidgruppen pro Molekül eingesetzt wird

8. Verfahren zur Herstellung einer vernetzbaren Schmelzklebermasse nach einem der vorherigen Ansprüche,
**dadurch gekennzeichnet,**
**dass** als Vernetzungskomponente ein pulverformiges Isocyanat in ein ataktisches Polyolefin durch Extrusion eingebunden wird und mit einer zweiten Komponente, die ein Copolyamid oder Copolyester ist, reagiert.

9. Verfahren zur Herstellung einer vernetzbaren Schmelzklebermasse nach einem der vorherigen Ansprüche,
**dadurch gekennzeichnet,**
**dass** die zweite Komponente ein amingeregeltes Copolyamid mit einem Schmelzbereich von 90 bis 150 °C und einer Lösungsviskosität eta rel im Bereich von 1,2 bis 1,7 ist.

10. Verfahren zum Gebrauch einer Schmelzklebermasse hergestellt nach einem Verfahren nach einem der vorherigen Ansprüche,
**dadurch gekennzeichnet,**
**dass** die reaktive Pulvermischung durch einen Streuprozess appliziert wird.

11. Verfahren zum Gebrauch einer Schmelzklebermasse nach einem der vorherigen Ansprüche,
**dadurch gekennzeichnet,**
**dass** die reaktive Pulvermischung in einer wässrigen Paste dispergiert ist und durch Rotationssiebdruck auf ein Flächengebilde appliziert wird.

12. Verfahren zum Gebrauch einer Schmelzklebermasse nach einem der vorherigen Ansprüche,
**dadurch gekennzeichnet,**
**dass** das reaktive Pulvergemisch als Basispunkt für die Doppelpunkttechnologie als Durchschlagsperre eingesetzt wird.

13. Verfahren zum Gebrauch einer Schmelzklebermasse nach einem der vorherigen Ansprüche,
**dadurch gekennzeichnet,**
**dass** der Basispunkt aus einer Pulvermischung besteht und als Paste rasterförmig aufgetragen wird.

14. Verfahren zum Gebrauch einer Schmelzklebermasse nach einem der vorherigen Ansprüche,
**dadurch gekennzeichnet,**
**dass** der Oberpunkt aus einem amingeregelten Copolyamid besteht.

## Claims

1. A process for preparing a crosslinkable hotmelt adhesive composition for the coating and/or lamination of sheetlike structures, **characterized in that** the crosslinking component is first bound by extrusion into an atactic polyolefin matrix in the melt and the reactive components do not react, with crosslinking, until in the melt.

2. A process for preparing a crosslinkable hotmelt adhesive composition according to claim 1, **characterized in that** the polyolefin is an atactic polypropylene having a melt viscosity of from 8000 to 50,000 mPas (at 190°C) and a softening point of from 80 to 150°C.

3. A process for preparing a crosslinkable hotmelt adhesive composition according to any one of the preceding claims, **characterized in that** the polyolefin is an atactic terpolymer based on ethene, propene and 1-butene and has a melt viscosity of from 8000 to 50,000 mPas (at 190°C)and a softening point of from 80 to 150°C.

4. A process for preparing a crosslinkable hotmelt adhesive composition according to any one of the preceding claims, **characterized in that** the polyolefin has a melt viscosity of from 8000 to 30,000 mPas (at 190°C) and a softening point of from 100 to 140°C.

5. A process for preparing a crosslinkable hotmelt adhesive composition according to any one of the preceding claims, **characterized in that** the crosslinking component comes from the group of the isocyanates and has more than two reactive groups per molecule.

6. A process for preparing a crosslinkable hotmelt adhesive composition according to claim 5, **characterized in that** the isocyanate has a melting range of from 100 to 130°C.

7. A process for preparing a crosslinkable hotmelt adhesive composition according to any one of the preceding claims, **characterized in that** an epoxide having a melting range of from 90 to 130°C, a molecular weight range from 2000 to 6000 and more than two epoxide groups per molecule is employed as crosslinking component.

8. A process for preparing a crosslinkable hotmelt adhesive composition according to any one of the preceding claims, **characterized in that** a pulverulent isocyanate is bound as crosslinking component by extrusion into an atactic polyolefin and reacts with a second component which is a copolyamide or copolyester.

9. A process for preparing a crosslinkable hotmelt adhesive composition according to any one of the preceding claims, **characterized in that** the second component is an amine-regulated copolyamide having a melting range from 90 to 150°C and a solution viscosity (eta rel) in the range from 1.2 to 1.7.

10. A method of using a hotmelt adhesive composition prepared by a process according to any one of the preceding claims, **characterized in that** the reactive powder mixture is applied by a scattering process.

11. A method of using a hotmelt adhesive composition according to any one of the preceding claims, **characterized in that** the reactive powder mixture is dispersed in an aqueous paste and is applied to a sheetlike structure by a rotary screen printing.

12. A method of using a hotmelt adhesive composition according to any one of the preceding claims, **characterized in that** the reactive powder mixture is employed as base dot for the double dot technology, as a strikethrough barrier.

13. A method of using a hotmelt adhesive composition according to any one of the preceding claims **characterized in that** the base dot consists of a powder mixture and is applied in halftone formation as a paste.

14. A method of using a hotmelt adhesive composition according to any one of the preceding claims, **characterized in that** the upper dot consists of an amine-regulated copolyamide.

## Revendications

1. Procédé de fabrication d'une masse de colle thermoplastique réticulable pour enduire et/ou laminer des produits de surface,
**caractérisé en ce que**
le composant de réticulation est d'abord lié dans la fusion par extrusion dans une matrice polyoléfine atactique, et les composants réactifs ne réagissent sous réticulation que dans la fusion.

2. Procédé de fabrication d'une masse de colle thermoplastique réticulable selon la revendication 1,
**caractérisé en ce que**
la polyoléfine est un polypropylène atactique ayant une viscosité de fusion de 8 000 à 50 000 mPas (à 190°C) et un point de ramollissement de 80 à 150°C.

3. Procédé de fabrication d'une masse de colle thermoplastique réticulable selon l'une des revendications précédentes,
**caractérisé en ce que**
la polyoléfine est un terpolymère atactique à base d'éthène, de propène et de butène-1 ayant une viscosité de fusion de 8 000 à 50 000 mPas (à 190°C) et un point de ramollissement de 80 à 150°C.

4. Procédé de fabrication d'une masse de colle thermoplastique réticulable selon l'une des revendications précédentes,
**caractérisé en ce que**
la polyoléfine a une viscosité de fusion de 8 000 à 30 000 mPas (à 190°C) et un point de ramollissement de 100 à 140°C.

5. Procédé de fabrication d'une masse de colle thermoplastique réticulable selon l'une des revendications précédentes,
**caractérisé en ce que**
le composant de réticulation provient du groupe des isocyanates et a plus de deux groupes réactifs par molécule.

6. Procédé de fabrication d'une masse de colle thermoplastique réticulable selon la revendication 5,
**caractérisé en ce que**
l'isocyanate présente un intervalle de fusion de 100 à 130°C.

7. Procédé de fabrication d'une masse de colle thermoplastique réticulable selon l'une des revendications précédentes,
**caractérisé en ce que**
le composant de réticulation utilisé est un époxyde ayant un intervalle de fusion de 90 à 130°C, une plage de masse moléculaire comprise entre 2 000 et 6 000 et plus de deux groupes époxydes par molécule.

8. Procédé de fabrication d'une masse de colle thermoplastique réticulable selon l'une des revendications précédentes,
**caractérisé en ce que**
le composant de réticulation est un isocyanate sous forme de poudre lié par extrusion dans une polyoléfine atactique et qui réagit avec un second composant qui est un copolyamide ou un copolyester.

9. Procédé de fabrication d'une masse de colle thermoplastique réticulable selon l'une des revendications précédentes,
**caractérisé en ce que**
le second composant est un copolyamide à régulation amine ayant un intervalle de fusion de 90 à 150°C et une viscosité de solution Eta Rel comprise dans une plage de 1,2 à 1,7.

10. Procédé d'utilisation d'une masse de colle thermoplastique fabriquée selon le procédé selon l'une des revendications précédentes,
**caractérisé en ce que**
le mélange de poudre réactif est appliqué par un processus de dispersion.

11. Procédé d'utilisation d'une masse de colle thermoplastique selon l'une des revendications précédentes,
**caractérisé en ce que**
le mélange de poudre réactif est dispersé dans une pâte aqueuse et est appliqué sur un produit de surface par compression en rotation dans un trémie.

12. Procédé d'utilisation d'une masse de colle thermoplastique selon l'une des revendications précédentes,
**caractérisé en ce que**
le mélange de poudre réactif est utilisé sous forme de suspension d'amorçage comme point de base dans la technologie du double point.

13. Procédé d'utilisation d'une masse de colle thermoplastique selon l'une des revendications précédentes,
**caractérisé en ce que**
le point de base est composé d'un mélange de poudre et est déposé sous forme de pâte tramée.

14. Procédé d'utilisation d'une masse de colle thermoplastique selon l'une des revendications précédentes,
**caractérisé en ce que**
le point supérieur est composé d'un copolyamide à régulation amine.
